# FASCICULE DE BREVET EUROPEEN

(11) **EP 2 443 198 B1**
(45) Date de publication et mention de la délivrance du brevet: **01.05.2019**
(21) Numéro de dépôt: 10724519.3
(22) Date de dépôt: 18.06.2010
(51) Int. Cl.: C08L 77/02, C08L 77/04, C08L 67/02, C08L 77/06, C08L 77/00, C08L 67/00

(54) **COMPOSITION D'UN ALLIAGE DE RESINES DE POLYAMIDE ET DE POLYESTER**
ZUSAMMENSETZUNG EINER MISCHUNG AUS POLYAMID- UND POLYESTERHARZEN
COMPOSITION OF A BLEND OF POLYAMIDE AND POLYESTER RESINS

(30) Priorité: 19.06.2009 FR 0954138; 30.06.2009 FR 0954438; 06.04.2010 FR 1052563
(43) Date de publication de la demande: 25.04.2012
(73) Titulaire: Rhodia Opérations, 93306 Aubervilliers (FR)
(72) Inventeur: LIM, Mok-Keun, Seoul 423-010 (KR); LEE, Kwang-Sang, Seoul 1356 (KR); YU, Yeong Chool, Seoul 157-836 (KR)
(74) Mandataire: Schuck, Alexander
(86) Numéro de dépôt international: PCT/EP2010/058594
(87) Numéro de publication internationale: WO 2010/146143

(56) Documents cités:
- EP-A1- 0 409 152
- EP-A1- 0 664 320
- DE-A1- 3 641 499
- GB-A- 2 210 623
- JP-A- 1 190 755
- US-A- 4 861 828
- US-A- 4 879 324
- US-A- 5 130 383
- Anonymous: "Exolit Overview", , 1 November 2008 (2008-11-01), pages 1-8, XP055029811, Retrieved from the Internet: URL:http://www.clariant.com/C125720D002B96 3C/D9E011C652301193C125728100597A07/$FILE/ DA4002E_1108_BR_ExolitOverview.pdf [retrieved on 2012-06-13]

## Description

La présente invention concerne une composition d'alliage de résine de polyamide et de résine de polyester avec une compatibilité améliorée, et plus particulièrement d'une composition d'alliage avec une compatibilité améliorée entre les deux résines ci-dessus qui sont généralement connues pour être incompatibles l'une envers l'autre.

La résine de polyamide possède de meilleures propriétés mécaniques, chimiques, thermiques et d'adhérence à la peinture, etc., et est donc utilisée dans de nombreux domaines. Toutefois, une résine de polyamide possède une faible stabilité dimensionnelle et les propriétés mécaniques de la résine de polyamide diminuent avec l'absorption d'eau. En conséquence, une tentative a été réalisée pour améliorer les propriétés de la résine de polyamide en mélangeant à l'état fondu la résine de polyamide avec une autre résine thermoplastique (par exemple, une résine de polyester) pour former un mélange à l'état fondu. Toutefois, étant donné qu'une résine de polyamide thermoplastique montre une faible compatibilité avec une résine de polyester thermoplastique, un mélange formé de seulement les deux résines présente une aptitude au traitement et des propriétés qui sont faibles.

Par conséquent, le brevet US n° 4 150 674 décrit l'utilisation d'un terpolymère de lactame comme agent de compatibilité lors du mélange d'une résine de polyamide avec une résine de polyester et l'utilisation du produit ainsi obtenu pour des tissus. En outre, le brevet US n° 5 055 509 décrit l'introduction d'azoture d'arylphosphonyle comme agent de compatibilité. Toutefois, les effets de la mise en compatibilité de ces composés n'ont pas été clairement vérifiés et les produits ainsi obtenus ne donnent pas les propriétés recherchées.

Le brevet US n° 5 296 550, le brevet US n° 5 475 058, les documents EP 664 320, EP 984 087, etc., décrivent une composition qui améliore la compatibilité entre les deux résines par l'ajout d'une résine oléfinique obtenue par copolymérisation par greffage d'un monomère de type éthylène (par exemple, du styrène, du méthacrylate, etc.) avec un monomère qui possède un groupe glycidyle (par exemple, du méthacrylate de glycidyle, etc.). Toutefois, cette composition présente des désavantages tels qu'une rigidité réduite comparativement aux résines de polyamide ou de polyester elles-mêmes.

Le document JP 1 190 755 décrit un mélange de résines (A) obtenu en mélangeant 20-95 % en poids d'une résine de polyamide obtenue par polycondensation d'un lactame à trois chaînons ou plus, d'un oméga-amino-acide polymérisable, d'un acide dibasique, d'une diamine ou analogue, avec 80-5 % en poids d'une résine de polyester thermoplastique à base d'un polyalkylène de téréphtalate obtenu par polycondensation d'acide téréphtalique (ou de son ester dialkylique) avec un glycol aliphatique. 100 % en poids du composant A est mélangé avec 5 à 50 % en poids d'un composé triazinique (B) (par exemple, le cyanurate de mélamine), 0,01-3 % en poids d'un composé bisphénol époxy d'un degré de polymérisation≥3, comprenant un produit de condensation d'un bisphénol A avec une épichlorhydrine (C) et/ou 2-40 % en poids d'un polymère d'oléfine (D) copolymérisé avec un acide carboxylique alpha, bêta-insaturé (dérivé) ou modifié avec celui-ci.

C.C. Huang et al., Polymer, 1997, 38(7), 2135-2141 et C. C. Huang et al., Polymer, 1997, 38(17), 4287-4293, décrivent des mélanges de polymères de PBT (poly(butylène téréphtalate)) et PA66 (polyamide-6,6) qui font appel à une résine époxy de type bisphénol-A à l'état solide ayant un poids équivalent d'époxy (EEW) de 2 060 g/éq. J. An et al., Journal of Applied Polymer Science, 1996, 60, 1803-1810, décrit des alliages de PBT et de PA-6 (polyamide-6) avec diverses quantités de résine époxy E-44 (EEW = 210 g/éq) . K. C. Chiou et al, Journal of Applied Polymer Science: Part B: Polymer Physics, 2000, 38, 23-33, fait appel à une résine époxy multifonctionnelle (EEW = 110 à 130 g/éq) comme agent de couplage pour rendre compatible des mélanges PA 6/PBT. Toutefois, dans le cas de l'utilisation d'une résine époxy d'un faible poids équivalent d'époxy dans des mélanges de polymères, l'aptitude au traitement et les propriétés des mélanges de polymères sont encore insatisfaisantes et doivent être améliorées.

Ainsi, l'objectif de la présente invention est de proposer une composition d'alliage d'une résine de polyamide et d'une résine de polyester qui présente une compatibilité améliorée.

Un autre objectif de la présente invention est de proposer une composition d'alliage de résines d'une résine de polyamide thermoplastique et d'une résine de polyester thermoplastique dont les propriétés mécaniques (propriétés de résistance, résistance à la flexion, élasticité, résistance à l'abrasion, résistance aux chocs), les propriétés chimiques (résistance aux solvants), la résistance thermique, la stabilité dimensionnelle, la peignabilité, etc. sont supérieures.

Pour atteindre les objectifs énoncés ci-dessus, la présente invention propose une composition d'alliage de résines d'une résine de polyamide et d'une résine de polyester avec une compatibilité améliorée, qui comprend a) une résine de polyamide, b) une résine de polyester, c) une résine époxy et un agent ignifugeant contenant du phosphore. Plus spécifiquement la composition selon la présente invention est une composition d'alliage d'une résine de polyamide et d'une résine de polyester montrant une compatibilité améliorée, qui comprend au moins :
a) de 1 à 98 % en poids d'une résine de polyamide thermoplastique ;
b) de 1 à 98 % en poids d'une résine de polyester thermoplastique ; et
c) de 0,01 à 10 % en poids d'une résine époxy ayant un poids équivalent d'époxy (EEW) compris entre 2100 et 6000 g/éq,
   et qui comprend au moins un agent ignifugeant contenant du phosphore.

### (a) Résine de polyamide

Dans un mode de réalisation, la résine de polyamide incluse dans la composition de la présente invention peut être toute résine de polyamide thermoplastique. Des exemples d'une résine de polyamide peuvent comprendre un polyamide-6 qui peut être obtenu comme des produits de polymérisation par ouverture de cycle de lactames tels que la ε-caprolactame et la ω-dodécalactame ; des polymères de polyamide qui peuvent être obtenus à partir d'acides aminés tels que l'acide aminocaproïque, l'acide 11-aminoundécanoïque et l'acide 12-aminododécanoïque ; des diamines aliphatiques, cycloaliphatiques ou aromatiques telles l'éthylènediamine, la tétraméthylènediamine, l'hexaméthylènediamine, l'undécaméthylènediamine, la dodécaméthylènediamine, la 2,2,4-triméthylhexaméthylènediamine, la 2,4,4-triméthylhexaméthylènediamine, la 5-méthylnonahexaméthylènediamine, la m-xylènediamine, la p-xylènediamine, le 1,3-bis-aminométhylcyclohexane, le 1,4-bisaminométhylcyclohexane, le 1-amino-3-aminométhyl-3,5,5-triméthylcyclohexane, le bis(4-aminocyclohexane)méthane, le bis(4-méthyl-4-aminocyclohexyl)méthane, le 2,2-bis(4-aminocyclohexyl)propane, la bis(aminopropyl)pipérazine, l'aminoéthylpipéridine, etc.; des polymères de polyamide qui peuvent être obtenus à partir d'acides dicarboxyliques aliphatiques, cycloaliphatiques ou aromatiques tels que l'acide adipique, l'acide sébacique, l'acide azélaïque, l'acide dodécanedioïque, l'acide téréphtalique, l'acide isophtalique, l'acide 2-chlorotéréphtalique, l'acide 2-méthyltéréphtalique et l'acide 5-méthylisophtalique ; et des copolymères des résines de polyamide, et celles-ci peuvent être utilisées seules ou en association de deux ou plusieurs types.

Dans certains modes de réalisation, des exemples de la résine de polyamide peuvent comprendre le polyamide-6, le polyamide-66, le polyamide-610, le polyamide-11, le polyamide-12, le polytéréphtalamide, le polyisophtalamide, et les polyaramides.

Les formules de structure générale de certaines de ces résines sont représentées comme suit :

<Polyamide-6> -[-HN-(CH₂)₅-CO-]-

<Polyamide-66> -[-HN-(CH₂)₆-NHCO-(CH₂)₄CO-]-

<Polyamide-66/6> -[-HN-(CH₂)₆-NHCO-(CH₂)₄CONH-(CH₂)₅-CO-]-

La matrice polyamide peut notamment être un polymère comprenant des chaînes macromoléculaires étoiles ou H branché, ramifié, hyperramifié, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Selon une autre variante particulière de l'invention, la matrice polyamide de l'invention peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

Dans un mode de réalisation, la viscosité relative de la résine de polyamide peut varier de 2,0 à 3,7 (une solution de 1 g de polymère dans 100 ml d'acide formique 90 %, mesurée à 25 °C). Dans un autre mode de réalisation, la masse moléculaire moyenne en nombre de la résine de polyamide peut varier d'environ 5 000 à 70 000.

Dans un mode de réalisation, le contenu de la résine de polyamide peut être choisi selon les propriétés recherchées. Dans un mode de réalisation, la résine de polyamide peut être incluse en une quantité de 1 à 98 % en poids par rapport au poids total de la composition.

### (b) Résine de polyester

Dans un mode de réalisation, la résine de polyester comprise dans la composition de la présente invention peut être un composé polymère qui possède des liaisons ester dans son squelette. Des exemples de la résine polyester peuvent comprendre un homopolymère ou un copolymère qui peut être obtenu par condensation d'un acide dicarboxylique (ou de ses dérivés pouvant former un ester) avec un diol (ou de ses dérivés pouvant former un ester), ou un mélange de ceux-ci.

Dans un mode de réalisation, un exemple d'acide dicarboxylique peut comprendre un acide dicarboxylique aromatique tel que l'acide téréphtalique, l'acide isophtalique, l'acide phtalique, l'acide dicarboxylique de 1,4-, de 1,5-, de 2,6- ou de 2,7-naphtalène, le bis(p-carboxyphényl)méthane, l'acide dicarboxylique d'anthracène, l'acide carboxylique de 4,4'-diphényl éther, l'acide 5-sodiumsulfoisophtalique, etc.; un acide dicarboxylique aliphatique tel l'acide adipique, l'acide sébacique, l'acide azélaïque, l'acide dodécanedioïque, etc.; un acide dicarboxylique cycloaliphatique tel que l'acide dicarboxylique de 1,3-cyclohexane, l'acide dicarboxylique de 1,4-cyclohexane, etc. ; et leurs dérivés pouvant former un ester, mais sans que ce soit limité à ceux-ci. Dans certain modes de réalisation, ledit acide dicarboxylique peut être utilisé sous la forme d'un dérivé pouvant former un ester tel qu'un dérivé substitué par un alkylalcoxy, ou un halogène, etc., et un ester obtenu à partir d'un alcool inférieur, par ex., l'ester diméthylique.

Dans un autre mode de réalisation, des exemples desdits diols peuvent comprendre un glycol aliphatique avec de 2 à 20 atomes de carbone tels que l'éthylène glycol, le propylène glycol, le 1,4-butanediol, le néopentyle glycol, le 1,5-pentanediol, le 1,6-hexanediol, le décaméthylène glycol, le cyclohexanediméthanol, le cyclohexanediol, etc. ; un glycol à longue chaîne avec un poids moléculaire de 400 à 6 000 tel que le polyéthylène glycol, le poly-1,3-propylène glycol, le polytétraméthylène glycol, etc, ; et leurs dérivés pouvant former un ester, mais sans que ce soit limité à ceux-ci. Dans certains modes de réalisation, lesdits diols peuvent être utilisés sous la forme de leurs dérivés pouvant former un ester tels qu'un dérivé substitué par un groupe alkyle, alcoxy ou un halogène, etc.

Dans un certain mode de réalisation, des exemples de l'homopolymère ou copolymère de ceux-ci peuvent comprendre du polybutylène téréphtalate, polybutylène (téréphtalate/isophtalate), polybutylène (téréphtalate/adipate), polybutylène (téréphtalate/sébacate), polybutylène (téréphtalate/décanedicarboxylate), polybutylène naphtalate, polyéthylène téréphtalate, polyéthylène (téréphtalate/isophtalate), polyéthylène (téréphtalate/adipate), polyéthylène (téréphtalate/5-sodiumsulfoisophtalate), polybutylène (téréphtalate/5-sodiumsulfoisophtalate), polypropylène téréphtalate, polyéthylène naphtalate, polycyclohexanediméthylène téréphtalate, mais sans que ce soit limité à ceux-ci.

Dans un autre mode de réalisation, des exemples de la résine de polyester autres que les composés ci-dessus peuvent comprendre une résine de polyester copolymérisée avec un monomère copolymérisable, par ex., un acide hydroxycarboxylique tel que l'acide glycolique, l'acide hydroxybenzoïque, l'acide hydroxyphénylacétique, l'acide naphtylglycolique, etc. ; et un composé de lactone tel la propriolactone, la butyrolactone, la caprolactone, la valérolactone, etc. Dans encore un autre mode de réalisation, des exemples de la résine de polyester peuvent comprendre une résine de polyester dérivée de composés formant un ester multifonctionnel tels que le triméthylolpropane, le triméthyloléthane, le pentaérythritol, l'acide trimellitique, l'acide trimésique, l'acide pyromellitique ou une résine de polyester ayant une structure ramifiée ou réticulée en une quantité à laquelle la résine de polyester maintient une thermoplasticité.

Le contenu de la résine de polyester peut être choisi selon les propriétés recherchées. Dans un mode de réalisation, la résine de polyester peut être incluse en une quantité de 1 à 98 % en poids par rapport au poids total de la composition.

La résine polyester peut notamment être un polyester recyclé provenant notamment d'articles en fin de vie ou de déchets de production. Ces polyesters peuvent provenir d'articles textiles, de bouteilles, de films ou de plastiques techniques, notamment les composites. Les polyesters peuvent être utilisés directement ou après un ou plusieurs traitements possibles, notamment d'hydrolyses ou visant a séparer les charges et additifs des compositions polyesters. Les déchets peuvent être par exemple cassés ou broyés sous forme de fragments, de poudres ou de granulés.

Il est possible selon l'invention d'utiliser dans la composition un mélange de polyester et de polyester recyclé.

### (c) Résine époxy

Dans un mode de réalisation, un composé ayant deux groupes époxy ou plus par molécule peut être utilisé dans une résine époxy. Si une résine époxy est ajoutée, par une liaison chimique entre un polyamide et/ou un polyester, il est possible d'obtenir un alliage de résines avec une compatibilité améliorée entre la résine de polyamide et la résine de polyester.

Dans un mode de réalisation, des exemples de la résine époxy peuvent comprendre une résine époxy de type DGEBA (éther diglycidylique de bisphénol A), une résine époxy de type DGEBF (éther diglycidylique de bisphénol F), une résine époxy de type BPA hydrogéné (bisphénol A hydrogéné), une résine époxy bromée, une résine époxy cycloaliphatique, une résine époxy de type polyglycidyle aliphatique, une résine époxy de type glycidyle amine, etc., mais sans que ce soit limité à celles-ci. La résine époxy peut être utilisée seule ou en association de deux ou plusieurs types.

Dans un mode de réalisation, la résine époxy peut être obtenue, par exemple, par réaction de bisphénol A, de bisphénol F, de bisphénol A ou de bisphénol F hydrogéné ou bromé, ou de composés ayant deux ou plusieurs groupes hydroxy avec de l'épichlorohydrine, ou peut être obtenue facilement sur le marché.

Dans un mode de réalisation, le nombre de groupes fonctionnels de la résine époxy peut être un ou plus, par exemple, quatre ou plus, selon le degré de polymérisation et la forme de la substance chimique. La résine époxy peut être soit sous la forme d'une phase liquide ou d'une phase solide.

Le poids équivalent d'époxy peut varier dans la plage de 2100 à 6000 g/éq, et préférentiellement dans des valeurs supérieures à 2200 g/eq, plus préférentiellement supérieures à 2300 g/eq, encore plus préférentiellement supérieures à 2500 g/eq ; notamment dans la plage de 2200 à 6000 g/éq, dans la plage de 2300 à 6000 g/éq ou dans la plage de 2500 à 6000 g/éq. Dans le cas de l'utilisation d'une résine époxy ayant un poids équivalent d'époxy inférieur à la plage ci-dessus, la viscosité de la composition d'alliage de résines augmente, détériorant ainsi l'aptitude au traitement.

Le poids équivalent d'epoxy (EEW = epoxy equivalent weight) d'une résine peut être mesuré par diverses méthodes connues. On peut notamment citer les normes JIS K 7236-1986, ASTM D1652-73, et ISO 3001-1978. Dans le cas d'une ditribution du poids équivalent epoxy pour une résine epoxy on prend en compte la valeur moyenne.

Dans un mode de réalisation, le contenu de la résine époxy peut varier de 0,01 à 10 % en poids par rapport au poids total de la composition. Dans un autre mode de réalisation, le contenu de la résine époxy peut varier de 0,05 à 7 % en poids, ou de 0,1 à 5 % en poids. Si le contenu de la résine époxy excède les plages ci-dessus, par exemple, la viscosité de la composition d'alliage de résines peut augmenter et/ou la fluidité de la composition se détériore, détériorant ainsi l'aptitude au traitement et causant des problèmes durant le traitement. Pendant ce temps, dans le cas où le contenu de la résine époxy est inférieur aux plages ci-dessus ou si aucune résine époxy n'est utilisée, la compatibilité entre la résine de polyamide et la résine de polyester est insuffisante, et ainsi l'aptitude au traitement se détériore et les propriétés telles que la rigidité et la résistance, etc., peuvent se détériorer.

Dans certains modes de réalisation, selon la propriété finale souhaitée, une composition d'alliage de résines peut en outre comprendre d'autres résines polymères, par exemple, du polyéthylène, du polystyrène, du polypropylène, de la résine ABS, du polycarbonate, du sulfure de polyphénylène, de l'oxyde de polyphénylène, du polyacétal, du polysulfone, de la polyéthersulfone, du polyétherimide, de la polyéthercétone, une résine d'acide polylactique, une résine de polysulfone, une résine élastomère ou des mélanges de ceux-ci.

La composition peut comprendre des charges fibreuses et/ou non fibreuses.

Comme charges fibreuses, on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 60 % en poids par rapport au poids total de la composition, de préférence entre 15 et 50 %.

La composition peut également comprendre des d'agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Dans un mode de réalisation, dans un cadre qui n'enfreint pas l'objectif de la présente invention, des additifs tels que des antioxydants, des stabilisants thermiques, des absorbants de rayonnement UV tels que des amines aromatiques, des phénols encombrés, du phosphore et du soufre, etc., des agents de dispersion, des colorants, des pigments, des agents tensio-actifs, des agents de démoulage, des lubrifiants, des plastifiants, des agents d'amélioration du lustre, qui sont généralement utilisés comme agents de traitement du plastique peuvent être utilisés pour transmettre divers effets.

La composition selon la présente invention comprend des agents ignifugeants généralement utilisés dans le domaine du polyamide ; c'est à dire des composés permettant de diminuer la propagation de la flamme et/ou ayant des propriétés d'ignifugation, bien connus de l'homme du métier. Ces agents ignifugeants sont habituellement utilisés dans des compositions ignifugées et sont notamment décrits, par exemple, dans les brevets US6344158, US6365071, US6211402 et US6255371, cités ici à titre de référence.

Avantageusement, la composition comprend au moins un agent ignifugeant choisi parmi le groupe comprenant :
- les oxydes de phosphines comme par exemple l'oxyde de triphénylphosphine, l'oxyde de tri-(3-hydroxypropyl) phosphine et l'oxyde de tri-(3-hydroxy-2-méthylpropyl) phosphine.
- les acides phosphoniques ou leurs sels ou les acides phosphiniques ou leurs sels, tels que par exemple les sels d'acides phosphiniques de zinc, de magnésium, de calcium, d'aluminium, ou de manganèse, notamment le sel d'aluminium de l'acide diéthylphosphinique ou le sel de zinc de l'acide diméthylphosphinique.
- les phosphonates cycliques, tels que les esters de diphosphate cyclique tel que par exemple l'Antiblaze 1045.
- les phosphates organiques, tels que le triphénylphosphate.
- les phosphates inorganiques, tels que les polyphosphates d'ammonium et les polyphosphates de sodium.
- le phosphore rouge, qu'il soit par exemple sous forme stabilisé ou revêtu, en poudre ou sous forme de masterbatches.

En outre, la composition peut comprendre :
* les agents ignifugeants de type composés organiques azotés tels que par exemple les triazines, l'acide cyanurique et/ou isocyanurique, la mélamine ou ses dérivés comme le cyanurate de mélamine, l'oxalate, le phtalate, le borate, le sulfate, le phosphate, polyphosphate et/ou pyrophosphate de mélamine, les produits condensés de la mélamine, tel que la mélem, la mélam et le mélon, le tris(hydroxyéthyl) isocyanurate, la benzoguanamine, la guanidine, l'allantoïne, et le glycoluril.
* les agents ignifugeants contenant des dérivés halogénés, tels que :
   - les dérivés du brome tels que par exemple les PBDPO (polybromodiphényloxydes), le BrPS (polystyrène bromé et polybromostyrène), le poly(pentabromobenzylacrylate), l'indane bromé, le tétradécabromodiphénoxybenzène (Saytex 120), l'éthane-1,2-bis(pentabromophényl) ou Saytex 8010 d'Albemarle, le tétrabromobisphénol A et les oligomères époxy bromés. Notamment parmi les dérivés bromés, nous pouvons citer le polydibromostyrène tel que le PDBS-80 de Chemtura, les polystyrènes bromés tels que le Saytex HP 3010 d'Albemarle ou le FR-803P de Dea Sea Bromine Group, le décabromodiphényléther (DBPE) ou FR-1210 de Dea Sea Bromine Group, l'octabromodiphényléther (OBPE), le 2,4,6-Tris(2,4,6-tribromophénoxy)-1,3,5 triazine ou FR-245 de Dead Sea Bromine Group, le Poly(pentabromobenzylacrylate) ou FR-1025 de Dead Sea Bromine Group et les oligomères ou polymères à terminaisons époxy du tétrabromobisphénol-A comme tels que les F-2300 et F2400 de Dead Sea Bromine Group.
   - les composés chlorés, tel que par exemple un composé cycloaliphatique chloré comme le Dechlorane plus® (vendu par OxyChem, voir CAS 13560-89-9).

Ces composés peuvent être utilisés seuls ou en combinaison, parfois synergique. On préfère notamment une association synergique de composés contenant du phosphore comme les oxydes de phosphines, les acides phosphoniques ou leurs sels ou les acides phosphiniques ou leurs sels, et les phosphonates cycliques ; avec des dérivés azotés tels que le mélam, le mélem, le phosphate de mélamine, les polyphosphates de mélamine, les pyrophosphates de mélamine ou les polyphosphates d'ammonium.

La composition peut comprendre de 1 à 40 % en poids d'agents ignifugeants, par rapport au poids total de la composition.

Dans un mode de réalisation, la composition d'alliage de résines de la résine de polyamide et de la résine de polyester peut être obtenue en mélangeant à l'état fondu les composants à l'aide d'une extrudeuse traditionnelle, par exemple, une extrudeuse à vis simple ou une extrudeuse à vis double, etc. Une plage générale pour la température du cylindre à l'intérieur de l'extrudeuse peut être réglée en tenant compte du point de fusion de la résine. Dans un mode de réalisation illustratif, lorsqu'une résine de polyamide-6 est utilisée, la température peut être réglée à 250 °C, et lorsqu'une résine de polyamide-66 est utilisée, la température peut être réglée à 280 °C. En outre, la composition d'alliage de résines de la présente demande peut être traitée dans des formes souhaitées telles qu'une pastille, un plat, une fibre, un brin, un film, une feuille, un tuyau, un corps creux, une boîte, etc., par des procédés de traitement tels que le moulage par calandrage traditionnel, le moulage par compression, le moulage par soufflage, le moulage par injection, le moulage par fusion, etc., mais les formes ou procédés de traitement ne sont pas limités à ceux-ci.

La composition selon la présente invention peut être utilisée selon l'utilisation générale d'une résine de polyamide ou d'une résine de polyester. Par exemple, elle peut être appliquée de diverses manières à des accessoires généraux de machinerie de précision, à des accessoires automobiles, à des accessoires électriques-électroniques, à des matériaux de construction, à des films, à des fibres, à de l'équipement sportif, etc.

Des exemples décrits ci-dessous servent à expliquer davantage les caractéristiques et les avantages de l'objet de la présente divulgation, mais sans qu'ils soient limités aux exemples présentés ci-dessous. L'objet de la présente divulgation ne doit pas être limité au mode de réalisation spécifique et aux exemples décrits ici. À la lumière de la présente divulgation, un homme du métier peut facilement percevoir qu'il est possible de modifier, de substituer, d'ajouter et de combiner une partie des constitutions décrites dans la présente divulgation autres que les divers modes de réalisation exemplaires et des exemples.

### PARTIE EXPERIMENTALE

Dans les exemples et les exemples comparatifs suivants, la composition d'alliage de résines de la présente invention et la composition comparative sont préparées respectivement, et leur résistance à la traction, leur allongement en traction, leur aptitude au traitement, etc., sont ensuite comparées, à partir desquelles les effets supérieurs de la composition d'alliage de résines de la résine de polyamide et de la résine de polyester de la présente invention sont décrits en détail.

Initialement, chaque composant utilisé dans les exemples et les exemples comparatifs de la présente invention sont classés et expliqués ci-dessous, et ils sont indiqués avec des symboles de référence.

### <Résine de polyamide thermoplastique>

A-1 : Résine de polyamide-66 thermoplastique {nom commercial : Technyl 23A, fabriqué par Rhodia}.
A-2 : Résine de polyamide-6 thermoplastique {nom commercial : Toplamide 1011, fabriqué par Hyosung}.

### <Résine de polyester thermoplastique>

B-1 : Résine de téréphtalate de polyéthylène {nom commercial : ESLON PET-2211, fabriqué par Woongjin Chemical}.
B-2 : Résine de téréphtalate de polybutylène {nom commercial : TRIBIT 1500 NA, fabriqué par Samyang Corporation}.
B-3 : Résine de téréphtalate de polyéthylène recyclé de bouteille.

### <Résine époxy>

C-1 : Résine époxy de type DGEBA {poids équivalent d'époxy : 3000 g/éq}, fabriqué par Kykdo Chemical, Co., Ltd.
C-2 : Résine époxy de type DGEBA {poids équivalent d'époxy : 500 g/éq}, fabriqué par Kykdo Chemical, Co., Ltd.
C-3 : Résine d'éthylène greffée avec un groupe de méthacrylate de glycidyle. Nom commercial : Lotarder A8900, fabriqué par Arkema.
C-4 : Résine époxy de type DGEBA {poids équivalent d'époxy : 2000 g/éq}

### Exemples 1 à 8 et exemples comparatifs 1 à 9 :

Dans un mode de réalisation illustratif, les composants choisis ci-dessus sont mélangés uniformément dans un super mélangeur selon chaque rapport de mélange des exemples et des exemples comparatifs. Une extrudeuse à double vis (diamètre interne de 30 mm, L/D = 30) est utilisée. Les températures du cylindre à l'intérieur de l'extrudeuse sont réglées à environ 250 °C lorsque la résine polyamide-6 est utilisée, et à environ 280 °C lorsque la résine polyamide-66 est utilisée, en tenant compte du point de fusion de la résine utilisée, et le gaz à l'intérieur des vis est épuisé sous une vitesse de rotation des vis de 250 à 300 tr/min et une pression de pompe à vide de 50 à 70 cm de Hg. Les composants sont parfaitement mélangés à l'intérieur du cylindre de l'extrudeuse et le brin formé est trempé dans un bain d'eau froide et mis en pastille à une taille prescrite en utilisant une pastilleuse.

Une machine à injection (German, ENGEL) ayant une force de fermeture de 80 tonnes et un volume d'injection de 189,44 cc (6,4 oz) est utilisée pour préparer l'échantillon pour divers tests de propriétés. Après la préparation de l'échantillon de la composition par moulage dans des conditions d'une température de moulage de la plage générale en tenant compte du point de fusion de la résine utilisée, une température de moulage de 80 °C, une pression d'injection de 50 à 80 bar, une vitesse d'injection de 40 à 60 mm/sec, une durée d'injection de trois secondes et une durée de refroidissement de quinze secondes.

Les propriétés globales sont mesurées à l'aide des méthodes suivantes, et les résultats sont présentés dans les tableaux 1-3 ci-dessous.

Les éléments à analyser et les méthodes d'analyse sont les suivants.
- Résistance à la traction : La résistance à la traction est mesurée à l'aide d'un appareil Instron selon la méthode d'analyse ASTM D-638. L'unité de mesure de la résistance à la traction est le kgf/cm².
- Élongation en traction : Le module de traction de l'élasticité est mesuré à l'aide d'un appareil Instron selon la méthode d'analyse ASTM D-638. L'unité de mesure de l'élongation en traction est le %.
- Pelage : L'échantillon préparé selon la méthode ASTM D-638 est plié plusieurs fois et il est examiné pour vérifier s'il se produit du pelage au point de pliage.

La norme est montrée ci-dessous : 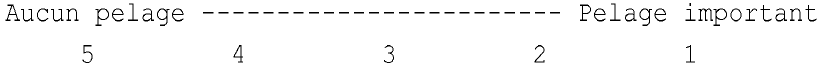
- Aptitude au traitement : Le degré de gonflement du brin à la sortie de l'extrudeuse est observé. La norme est montrée ci-dessous :

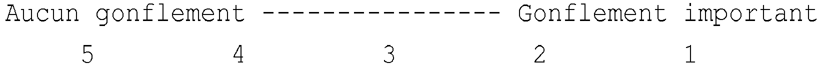

**Tableau 1**

| Composant (% en poids) | Exemple 1 | Exemple 2 | Exemple 3 | Exemple 4 | Exemple 5 | Exemple 6 |
|---|---|---|---|---|---|---|
| A-1 | 57 | 57 | 40 | | | 59,7 |
| A-2 | | | | 57 | 40 | |
| B-1 | 40 | | 57 | | | 40 |
| B-2 | | 40 | | 40 | 57 | |
| C-1 | 3 | 3 | 3 | 3 | 3 | 0,3 |
| Résistance à la traction (MPa) | 80 | 79 | 71 | 67 | 56 | 79 |
| Élongation en traction (%) | 120 | 70 | 90 | 130 | 100 | 30 |
| Pelage | 5 | 5 | 5 | 5 | 5 | 5 |
| Gonflement | 5 | 5 | 5 | 5 | 5 | 5 |

**Tableau 2**

| Composant (% en poids) | Exemple comp. 1 | Exemple comp. 2 | Exemple comp. 3 | Exemple comp. 4 | Exemple comp. 5 | Exemple comp. 6 |
|---|---|---|---|---|---|---|
| A-1 | 50 | 57 | 57 | 57 | 50 | 60 |
| A-2 | | | | | | |
| B-1 | 35 | | 40 | 40 | 40 | 40 |
| B-2 | | 40 | | | | |
| C-1 | 15 | | | | | |
| C-2 | | 3 | 0,3 | | | |
| C-3 | | | | 3 | 10 | |
| * Résistance à la traction (MPa) | - | - | 70 | - | 46 | - |
| * Élongation en traction (%) | - | - | 10 | - | 3 | - |
| * Pelage | - | - | 4 | - | 3 | - |
| * Gonflement | 1 | 1 | 3 | 2 | 3 | 1 |

**Tableau 3**

| Composant (% en poids) | Exemple 7 | Exemple 8 | Exemple 8 | Exemple comp 7 | Exemple comp 8 | Exemple comp 9 |
|---|---|---|---|---|---|---|
| A-1 | 58,5 | 57,3 | 56,1 | 58,5 | 57,3 | 56,1 |
| B-1 | 38 | 38,2 | 37,4 | 38 | 38,2 | 37,4 |
| C-1 | 2 | 4 | 6 | - | - | - |
| C-4 | | | | 2 | 4 | 6 |
| Élongation en traction (%) | 51,9 | 66,2 | 62,2 | 4,7 | 11,5 | 14,3 |

À partir des tableaux 1-3 ci-dessus, il peut être confirmé que la compatibilité se soit améliorée en ajoutant une résine époxy à une composition d'alliage de résines de polyamide 6 ou de polyamide 66 et de téréphtalate de polyéthylène ou de téréphtalate de polybutylène sans aucune compatibilité. Dans le cas d'un important gonflement à la sortie de l'extrudeuse par manque de compatibilité (exemple comparatif 4, exemple comparatif 6), les propriétés et le pelage ne peuvent pas être évalués, car aucune pastille n'a pu être obtenue.

Dans le cas où une importante quantité de résine époxy est ajoutée (exemple comparatif 1), la viscosité de la composition d'alliage de résines est trop élevée et l'aptitude au traitement se révèle donc mauvaise. La composition obtenue par l'ajout d'une résine époxy ayant un faible poids équivalent d'époxy présente un important gonflement à la sortie de l'extrudeuse et, ainsi, les propriétés et le pelage ne peuvent être évalués, car aucune pastille ne peut être obtenue (exemple comparatif 2), ou l'aptitude au traitement et les propriétés sont inférieures comparativement à la composition de résines qui utilise la résine époxy présentée dans la présente invention (exemple comparatif 3).

Dans le cas où la compatibilité est obtenue en utilisant une résine d'éthylène greffée avec un groupe de méthacrylate de glycidyle connue dans l'art antérieur (exemple comparatif 5), la rigidité, la résistance et l'aptitude au traitement sont toutes insuffisantes.

### Exemples 9 à 11 :

Pour la réalisation de compositions comprenant des polyester recyclés le protocole est le même que mentionné précédemment. Les composants choisis ci-dessus sont mis en oeuvre selon chaque rapport de mélange des exemples et mentionnés dans le tableau suivant avec les propriétés indiquées.

**Tableau 4**

| Composant (% en poids) | Exemple 9 | Exemple 10 | Exemple 11 |
|---|---|---|---|
| A-1 | 58,8 | 58,8 | 58,8 |
| B-1 | 39,2 | 19,6 | - |
| B-3 | - | 19,6 | 29,2 |
| C-1 | 1,5 | 1,5 | 1,5 |
| Résistance à la traction | 788,1 | 783,4 | 797,9 |
| Module en flexion ASTMD790 (kgf/cm²) | 29440 | 28750 | 30120 |
| IZOD impact ASTMD256 (kgf/cm/cm) | 4,34 | 4,01 | 4,20 |

On observe des propriétés mécaniques équivalentes et satisfaisantes entre les différentes formulations selon l'invention.

### Exemple 12 et exemple comparatif 12 :

Pour la réalisation de compositions ignifugées le protocole est le même que mentionné précédemment. Les composants sont mis en oeuvre selon chaque rapport de mélange des exemples et mentionnés dans le tableau suivant avec les propriétés indiquées.

**Tableau 5**

| Composant (% en poids) | Exemple 12 | Exemple comparatif 12 |
|---|---|---|
| A-1 | 34,08 | 51,2 |
| B-1 | 22,72 | - |
| C-1 | 0,6 | - |
| Fibres de verre | 30 | 30 |
| Organo-phosphoré | 8,1 | 11,6 |
| PPM | 4,1 | 5,8 |
| GWIT, 2 mm (°C) | 775 | 775 |
| GWFI, 2 mm (°C) | 960 | 960 |
| UL 94 0,8 mm | VO | V0 |
| Résistance à la traction (MPA) | 137,9 | 133,7 |

Le composé organo-phosphoré est l'Exolit OP1230 de la société Clariant. Le PPM est le polyphosphate de mélamine.

On observe ainsi qu'un alliage selon la présente invention permet d'obtenir des propriétés d'ignifugation tout à fait remarquable et ceci en utilisant une quantité moindre (réduction de 30%) d'agents ignifugeants dans la formulation.

### Exemple 13 et exemple comparatif 13 :

Pour la réalisation de compositions ignifugées le protocole est le même que mentionné précédemment. Les composants sont mis en oeuvre selon chaque rapport de mélange des exemples et mentionnés dans le tableau suivant avec les propriétés indiquées.

**Tableau 6**

| Composant (% en poids) | Exemple 12 | Exemple comparatif 12 |
|---|---|---|
| A-1 | 47 | 51,2 |
| B-1 | 20 | - |
| C-1 | 1 | - |
| Fibres de verre | 25 | 25 |
| Phosphore rouge | 6,6 | 11 |
| GWIT, 775°C, 1 mm | Passe | Passe |
| GWIT, 775°C, 2 mm | Passe | Echoue |
| GWFI, 960°C, 1 mm | Passe | Passe |
| GWFI, 960°C, 2 mm | Passe | Passe |
| UL 94 0,8 mm | V0 | VO |
| CTI (V) | 450 | 425 |
| Résistance à la traction (MPA) | 167 | 167 |
| Elongation à la rupture (%) | 3,1 | 3,1 |

Le phosphore rouge est le RPM 460 FerroFlam.

On observe ainsi qu'un alliage selon la présente invention permet d'obtenir des propriétés d'ignifugation tout à fait remarquable et ceci en utilisant une quantité moindre (réduction de 40%) d'agents ignifugeants dans la formulation.

### Effet avantageux

Une composition d'alliage de résines avec une compatibilité remarquablement améliorée peut être obtenue en ajoutant une résine époxy spécifique à un alliage d'une résine de polyamide et d'une résine de polyester bien connues pour n'avoir aucune compatibilité. L'alliage de résines avec une compatibilité améliorée peut présenter d'excellentes propriétés telles que des propriétés mécaniques (propriétés de résistance, résistance à la flexion, élasticité, résistance à l'abrasion, résistance aux chocs), des propriétés chimiques (résistance aux solvants), une résistance thermique, une stabilité dimensionnelle, une peignabilité, etc.

## Revendications

1. Composition d'alliage d'une résine de polyamide et d'une résine de polyester montrant une compatibilité améliorée, qui comprend au moins:
a) de 1 à 98 % en poids d'une résine de polyamide thermoplastique ;
b) de 1 à 98 % en poids d'une résine de polyester thermoplastique ; et
c) de 0,01 à 10 % en poids d'une résine époxy ayant un poids équivalent d'époxy (EEW) compris entre 2100 et 6000 g/éq, et
qui comprend au moins un agent ignifugeant contenant du phosphore.

2. Composition selon la revendication 1, **caractérisée en ce que** ladite résine époxy comprend un ou plusieurs éléments choisis dans le groupe constitué d'une résine époxy de type DGEBA (éther diglycidylique de bisphénol A), une résine époxy de type DGEBF (éther diglycidylique de bisphénol F), une résine époxy de type BPA hydrogéné (bisphénol A hydrogéné), une résine époxy bromée, une résine époxy cycloaliphatique, une résine époxy de caoutchouc modifié, une résine époxy de type polyglycidyle aliphatique et une résine époxy de type glycidyle aminé.

3. Composition selon l'une quelconque des revendications 1 à 2, **caractérisée en ce que** le poids équivalent d'époxy de ladite résine époxy varie de 2500 à 6000 g/éq.

4. Composition selon l'une quelconque des revendications 1 à 3, **caractérisée en ce que** ladite composition comprend de 0,05 à 7 % en poids de ladite résine époxy.

5. Composition selon l'une quelconque des revendications 1 à 4, **caractérisée en ce que** ladite résine de polyamide comprend un ou plusieurs éléments choisis dans le groupe constitué du polyamide-6, du polyamide-66, du polyamide-610, du polyamide-11, du polyamide-12, le polytéréphtalamide, le polyisophtalamide, et les polyaramides.

6. Composition selon l'une quelconque des revendications 1 à 5, **caractérisée en ce que** ladite résine de polyester comprend un ou plusieurs éléments choisis dans le groupe constitué du polybutylène téréphtalate, du polybutylène (téréphtalate/isophtalate), du polybutylène (téréphtalate/adipate), du polybutylène (téréphtalate/sébacate), du polybutylène (téréphtalate/décanedicarboxylate), du polybutylène naphtalate, du polyéthylène téréphtalate, du polyéthylène (téréphtalate/isophtalate), du polyéthylène (téréphtalate/adipate), du polyéthylène (téréphtalate/5-sodiumsulfoisophtalate), du polybutylène (téréphtalate/5-sodiumsulfoisophtalate), du polypropylène téréphtalate, du polyéthylène naphtalate et du polycyclohexanediméthylène téréphtalate.

7. Composition selon l'une quelconque des revendications 1 à 6, **caractérisée en ce que** ladite résine de polyester est une résine recyclée.

8. Composition selon l'une quelconque des revendications 1 à 6, **caractérisée en ce que** l'agent ignifugeant est choisi parmi les oxides de phosphines, les acides phosphoniques ou leurs sels, les acides phosphiniques ou leurs sels, les phosphonates cycliques, les phosphates organiques, et le phosphore rouge.

9. Procédé de préparation d'une composition d'alliage d'une résine de polyamide et d'une résine de polyester montrant une compatibilité améliorée, qui comprend un mélange à l'état fondu :
a) de 1 à 98 % en poids d'une résine de polyamide thermoplastique ;
b) de 1 à 98 % en poids d'une résine de polyester thermoplastique ; et
c) de 0,01 à 10 % en poids d'une résine époxy ayant un poids équivalent d'époxy compris entre 2100 et 6000 g/éq ;
et un agent ignifugeant contenant du phosphore.

## Patentansprüche

1. Mischungszusammensetzung aus einem Polyamidharz und einem Polyesterharz mit verbesserter Verträglichkeit, die mindestens Folgendes umfasst:
a) 1 bis 98 Gew.-% eines thermoplastischen Polyamidharzes;
b) 1 bis 98 Gew.-% eines thermoplastischen Polyesterharzes; und
c) 0,01 bis 10 Gew.-% eines Epoxidharzes mit einem Epoxidäquivalentgewicht (EEW) zwischen 2100 und 6000 g/eq, und
die mindestens ein phosphorhaltiges Flammschutzmittel umfasst.

2. Zusammensetzung nach Anspruch 1, **dadurch gekennzeichnet, dass** das Epoxidharz ein oder mehrere Elemente aus der Gruppe bestehend aus einem Epoxidharz vom Typ DGEBA (Diglycidylether von Bisphenol A), einem Epoxidharz vom Typ DGEBF (Diglycidylether von Bisphenol F), einem Epoxidharz vom Typ hydriertes BPA (hydriertes Bisphenol A), einem bromierten Epoxidharz, einem cycloaliphatischen Epoxidharz, einem Epoxidharz von modifiziertem Kautschuk, einem Epoxidharz vom Typ aliphatisches Polyglycidyl und einem Epoxidharz vom Typ Glycidylamin ausgewählt ist.

3. Zusammensetzung nach einem der Ansprüche 1 bis 2, **dadurch gekennzeichnet, dass** das Epoxidäquivalentgewicht des Epoxidharzes von 2500 bis 6000 g/eq variiert.

4. Zusammensetzung nach einem der Ansprüche 1 bis 3, **dadurch gekennzeichnet, dass** die Zusammensetzung 0,05 bis 7 Gew.-% des Epoxidharzes umfasst.

5. Zusammensetzung nach einem der Ansprüche 1 bis 4, **dadurch gekennzeichnet, dass** das Polyamidharz ein oder mehrere Elemente aus der Gruppe bestehend aus Polyamid-6, Polyamid-66, Polyamid-610, Polyamid-11, Polyamid-12, Polyterephthalamid, Polyisophthalamid und Polyaramiden umfasst.

6. Zusammensetzung nach einem der Ansprüche 1 bis 5, **dadurch gekennzeichnet, dass** das Polyesterharz ein oder mehrere Elemente aus der Gruppe bestehend aus Polybutylenterephthalat, Polybutylen(terephthalat/isophthalat), Polybutylen(terephthalat/adipat), Polybutylen(terephthalat/sebacat), Polybutylen(terephthalat/decandicarboxylat), Polybutylennaphthalat, Polyethylenterephthalat, Polyethylen(terephthalat/isophthalat), Polyethylen-(terephthalat/adipat), Polyethylen(terephthalat/5-natriumsulfoisophthalat), Polybutylen(terephthalat/5-natriumsulfoisophthalat), Polypropylenterephthalat, Polyethylennaphthalat und Polycyclohexandimethylenterephthalat umfasst.

7. Zusammensetzung nach einem der Ansprüche 1 bis 6, **dadurch gekennzeichnet, dass** es sich bei dem Polyesterharz um ein rezykliertes Harz handelt.

8. Zusammensetzung nach einem der Ansprüche 1 bis 6, **dadurch gekennzeichnet, dass** das Flammschutzmittel aus Phosphinoxiden, Phosphonsäuren oder Salzen davon, Phosphinsäuren oder Salzen davon, cyclischen Phosphonaten, organischen Phosphaten und rotem Phosphor ausgewählt ist.

9. Verfahren zur Herstellung einer Mischungszusammensetzung aus einem Polyamidharz und einem Polyesterharz mit verbesserter Verträglichkeit, bei dem man eine Mischung von:
a) 1 bis 98 Gew.-% eines thermoplastischen Polyamidharzes;
b) 1 bis 98 Gew.-% eines thermoplastischen Polyesterharzes; und
c) 0,01 bis 10 Gew.-% eines Epoxidharzes mit einem Epoxidäquivalentgewicht (EEW) zwischen 2100 und 6000 g/eq,
und einem phosphorhaltigen Flammschutzmittel in der Schmelze mischt.

## Claims

1. Composition of a blend of a polyamide resin and of a polyester resin displaying improved compatibility, which comprises at least:
a) from 1 to 98 wt.% of a thermoplastic polyamide resin;
b) from 1 to 98 wt.% of a thermoplastic polyester resin; and
c) from 0.01 to 10 wt.% of an epoxy resin having an epoxy equivalent weight (EEW) between 2100 and 6000 g/eq; and
which comprises at least one phosphorus-containing flame retardant.

2. Composition according to Claim 1, **characterized in that** said epoxy resin comprises one or more elements selected from the group consisting of an epoxy resin of the DGEBA type (diglycidyl ether of bisphenol A), an epoxy resin of the DGEBF type (diglycidyl ether of bisphenol F), an epoxy resin of the hydrogenated BPA type (hydrogenated bisphenol A), a brominated epoxy resin, a cycloaliphatic epoxy resin, an epoxy resin of modified rubber, an epoxy resin of the aliphatic polyglycidyl type and an epoxy resin of the glycidyl amine type.

3. Composition according to either one of Claims 1 and 2, **characterized in that** the epoxy equivalent weight of said epoxy resin varies from 2500 to 6000 g/eq.

4. Composition according to any one of Claims 1 to 3, **characterized in that** said composition comprises from 0.05 to 7 wt.% of said epoxy resin.

5. Composition according to any one of Claims 1 to 4, **characterized in that** said polyamide resin comprises one or more elements selected from the group consisting of polyamide-6, polyamide-66, polyamide-610, polyamide-11, polyamide-12, polyterephthalamide, polyisophthalamide, and polyaramids.

6. Composition according to any one of Claims 1 to 5, **characterized in that** said polyester resin comprises one or more elements selected from the group consisting of polybutylene terephthalate, polybutylene (terephthalate/isophthalate), polybutylene (terephthalate/adipate), polybutylene (terephthalate/sebacate), polybutylene (terephthalate/decanedicarboxylate), polybutylene naphthalate, polyethylene terephthalate, polyethylene (terephthalate/isophthalate), polyethylene (terephthalate/adipate), polyethylene (terephthalate/5-sodium sulfoisophthalate), polybutylene (terephthalate/5-sodium sulfoisophthalate), polypropylene terephthalate, polyethylene naphthalate and polycyclohexanedimethylene terephthalate.

7. Composition according to any one of Claims 1 to 6, **characterized in that** said polyester resin is a recycled resin.

8. Composition according to any one of Claims 1 to 6, **characterized in that** the flame retardant is selected from phosphine oxides, phosphonic acids or salts thereof, phosphonic acids or salts thereof, cyclic phosphonates, organic phosphates, and red phosphorus.

9. Method of preparation of a composition of a blend of a polyamide resin and of a polyester resin displaying improved compatibility, which comprises mixing in the molten state:
a) from 1 to 98 wt.% of a thermoplastic polyamide resin;
b) from 1 to 98 wt.% of a thermoplastic polyester resin; and
c) from 0.01 to 10 wt.% of an epoxy resin having an epoxy equivalent weight between 2100 and 6000 g/eq;
and a phosphorus-containing flame retardant.
